# EUROPÄISCHE PATENTSCHRIFT

(11) **EP 1 312 171 B1**
(45) Veröffentlichungstag und Bekanntmachung des Hinweises auf die Patenterteilung: **29.03.2006**
(21) Anmeldenummer: 01943142.8
(22) Anmeldetag: 21.05.2001
(51) Int. Cl.: H04B 1/04, G08C 17/02

(54) **ENERGIEAUTARKER HOCHFREQUENZSENDER**
ENERGY SELF-SUFFICIENT HIGH FREQUENCY TRANSMITTER
EMETTEUR HAUTE FREQUENCE A AUTONOMIE ENERGETIQUE

(30) Priorität: 24.05.2000 DE 10025561
(43) Veröffentlichungstag der Anmeldung: 21.05.2003
(73) Patentinhaber: EnOcean GmbH, 82041 Oberhaching (DE)
(72) Erfinder: PISTOR, Klaus, 83623 Linden (DE); SCHMIDT, Frank, 85604 Zorneding (DE)
(74) Vertreter: Epping - Hermann - Fischer
(86) Internationale Anmeldenummer: PCT/DE2001/001965
(87) Internationale Veröffentlichungsnummer: WO 2001/091315

(56) Entgegenhaltungen:
- EP-A- 0 617 500
- WO-A-98/36395
- DE-A- 3 643 236
- DE-A- 4 204 463
- US-A- 3 596 262

## Beschreibung

Die Erfindung betrifft einen energieautarken Hochfrequenzsender, dessen Verwendung sowie ein Verfahren zum energieautarken Senden eines Hochfrequenzsignals.

Bisher bekannt sind energieautarke Systeme, bei denen mittels eines piezoelektrischen Wandlers mechanische in elektrische Energie umgewandelt und danach gleichgerichtet wird. Diese elektrische Energie wird dazu verwendet, einfache Schwingkreise anzusteuern.

Dokument US-A-3 596 262 offenbart ein energieautarken Hochfrequenzsender, aufweisend einen elektromechanischen Wandler mit einer nachgeschalteten Gleichrichterschaltung und einer Spannungswandlerschaltung. Weiter offentbart das Dokument eine Hochfrequenzsendestufe und eine Sendeantenne. Die Hochfrequenzsendestufe wird mit Messdaten von einem Sensor moduliert.

Es ist die Aufgabe der vorliegenden Erfindung, einen energieautarken Sender mit einer verbesserten Möglichkeit zur Informationsübermittlung bereitzustellen.

Diese Aufgabe wird mittels eines energieautarken Hochfrequenzsenders nach Anspruch 1, eines Verfahrens nach Anspruch 14 sowie einer Anwendung nach Anspruch 24 gelöst.

Unter einem elektromechanischen Wandler wird ein allgemeines Bauelement verstanden, bei dem mechanische Energie in elektrische Energie umwandelbar ist, beispielsweise ein piezoelektrisches,elektrostriktives oder magnetostriktives Element oder eine elektromagnetische Induktionsspule.

Die mechanische Energie kann beispielsweise erzeugt werden aus:
- einer Handbetätigung eines Schalters, Tasters oder eines anderen Bedienelements;
- einer gerichteten mechanischen Krafteinwirkung, beispielsweise dem Öffnen oder Schließen von Fenstern oder Türen oder Anschlagschaltern in industriellen Anlagen;
- einer Druckänderung, beispielsweise in Flüssigkeiten oder Gasen;
- einer Vibration, beispielsweise an Maschinen, Rädern, Fahrzeugen.

Die vom Wandler erzeugte Spannung wird durch die Gleichrichterschaltung gleichgerichtet und dann an einen Spannungswandler weitergeleitet. Mittels des Spannungswandlers wird sichergestellt, dass zumindest über einen kurzen Zeitraum eine konstante Spannung abgreifbar ist. Dadurch werden Spannungsspitzen vermieden, und zudem wird die Betriebssicherheit erhöht.

Die Verbindung zwischen Gleichrichter und Spannungswandler kann direkt geschehen oder über ein zusätzlich vorhandenes Stromspeicherelement, z. B. einen Kondensator. Bei Vorhandensein eines Kondensators ist beispielsweise durch den nachfolgenden Spannungswandler eine typischerweise exponentiell abfallende Ladespannung des Kondensators zumindest kurzfristig in eine konstante Spannung umwandelbar. Das Wandlerelement kann aber auch selbst die elektrischen Spannungen speichern.

Ist ein ausreichendes Spannungssignal zur Energieversorgung der Logikbaugruppe vorhanden, so übermittelt die Logikbaugruppe mindestens einen Identifikationscode und gegebenenfalls noch andere Informationen, beispielsweise Sensormesssignale, an die Hochfrequenzsendestufe. In der Hochfrequenzsendestufe wird das Spannungssignal dazu verwendet, ein den Identifikationscode enthaltendes Hochfrequenzsignal zu generieren und über die Sendeantenne abzustrahlen.

Diese Methode zur energieautonomen Übermittlung von Signalen weist den Vorteil auf, dass der Ausnutzungsgrad der vom Wandler gelieferten Energie bezüglich der aussendbaren Informationsdichte sehr hoch ist. Zwar verbraucht ein solches System eine im Vergleich zu einfachen Schwingkreisen höhere elektrische Energie pro Zeiteinheit, jedoch ist es möglich, eine dazu überproportional hohe Informationsdichte pro Zeiteinheit zu senden. Zusammengenommen ergibt sich daraus eine bessere Ausnutzung der vom Wandler zur Verfügung gestellten elektrischen Energie.

Es ist zur Erreichung eines hohen Wirkungsgrades und einer kompakten Bauweise vorteilhaft, wenn der elektromechanische Wandler mindestens ein Piezoelement enthält, insbesondere einen piezoelektrischen Biegewandler.

Es wird auch bevorzugt, z. B. zur Erreichung eines preiswerten Aufbaus, wenn der elektromechanische Wandler mindestens eine Induktionsspule enthält.

Zur Gewährleistung einer ausreichend langen Energieversorgung ist es vorteilhaft, wenn zwischen der Gleichrichterschaltung und der Spannungswandlerschaltung mindestens ein Energiespeicherelement, z. B. in Form eines Kondensators, zur Stromspeicherung vorhanden ist.

Zur Erhöhung des Wirkungsgrads ist es weiterhin günstig, wenn die Spannungswandlerschaltung mit einem weiteren Energiespeicherelement ausgerüstet ist. Insbesondere ist dies günstig, wenn die Spannungswandlerschaltung getaktet betrieben wird.

Die Logikbaugruppe ist mit mindestens einem Sensor verbunden. Dadurch werden von der Logikbaugruppe außer dem Identifikationscode auch Messdaten des mindestens einen Sensors erfasst bzw. ausgelesen und diese Messdaten dem Hochfrequenzsignal aufgeprägt.

Es ist auch vorteilhaft, wenn bei einer ausreichend langzeitigen Spannungsversorgung mehrere Hochfrequenzsignale mit vollständigem Informationsinhalt hintereinander abgestrahlt werden, weil durch diese Redundanz eine erhöhte Ubermittlungssicherheit geschaffen wird.

Es ist zur erhöhten Abhörsicherheit vorteilhaft, wenn die Information des Hochfrequenzsignals verschlüsselt wird, typischerweise durch eine in die Logikbaugruppe integrierte Verschlüsselungslogik. Dadurch ist es auch möglich, die Übertragungssicherheit durch Eingabe individueller Schlüssel zu erhöhen, beispielsweise zur Zutrittskontrolle. Insbesondere ist es beim Senden mehrerer Hochfrequenzsignale günstig, wenn jedes der Hochfrequenzsignale unterschiedlich verschlüsselt ist, z. B. mit einem unterschiedlichen Schlüssel.

Auch ist es zur Unterdrückung einer Ubertragungsstörung günstig, wenn beim Senden mehrerer Hochfrequenzsignale ihr zeitlicher Abstand zueinander variabel ist und/oder die Frequenz der einzelnen Hochfrequenzsignale verschieden ist.

Ebenfalls zur erhöhten Übertragungssicherheit, insbesondere in Umgebungen mit mehreren Hochfrequenzsendern, ist es vorteilhaft, wenn die Abstrahlung des Hochfrequenzsignals zeitverzögert wird, beispielsweise durch variable, z. B. statistische, Einstellung einer Verzögerung. Die Verzögerung ist beispielsweise in der Software der Logikbaugruppe realisierbar. Durch einen Einsatz von Hochfrequenzsendern mit jeweils statistisch verteilter Verzögerungszeit ihrer Verzögerungsvorrichtungen ist eine Erhöhung der Übertragungswahrscheinlichkeit möglich.

Es ist vorteilhaft, wenn die Logikbaugruppe einen Mikroprozessor oder einen ASIC-Baustein enthält.

Typischerweise wird ein Teil der vom Wandler bereitgestellten elektrischen Energie dazu verwendet, die Logikbaugruppe in einen Betriebszustand hochzufahren. Dazu wird normalerweise ein Schwingquarz als Taktgeber vorgesehen. Es ist zur Verkürzung der Zeit zum Hochfahren der Logikbaugruppe gunstig, wenn statt eines Schwingquarzes ein LC-Schwingkreis oder ein RC-Schwingkreis als Taktgeber vorhanden ist.

Zur Erreichung einer hohen Datenübertragungsrate ist es vorteilhaft, wenn mittels der Hochfrequenzsendestufe ein Signal mit einer Frequenz > 1 MHz gesendet wird. Heutzutage technisch realisiert werden z. B. Frequenzen F zwischen 100 MHz und 30 GHz. Allerdings besteht keine prinzipielle obere Grenze für die Frequenz.

Zur Erreichung eines hohen Datendurchsatzes innerhalb einer kurzen Zeit ist es vorteilhaft, wenn die Bandbreite des Hochfrequenzsignals mindestens 100 kHz beträgt.

Während eines Sendezyklus wird von der Logikbaugruppe
- den identifikationscode ausgelesen, beispielsweise aus einem Speicher der Logikbaugruppe;
- ein Sendetelegramm generiert, welches mindestens den Identifikationscode und gegebenenfalls andere Informationen, beispielsweise Messdaten von Sensoren, enthält;
- die Hochfrequenzsendestufe aktiviert;
- der hochfrequenten Schwingung das Sendetelegramm aufmoduliert, gegebenenfalls verschlüsselt und/oder zeitverzögert.

Insbesondere vorteilhaft ist die Verwendung des Hochfrequenzsenders in der Verkehrstechnik, insbesondere Automobiltechnik und Bahntechnik, und/oder in der Gebäudetechnik, insbesondere der Installationstechnik, zum Beispiel zur Steuerung von Hausgeräten, elektrischen Anlagen oder zur Zugangskontrolle.

Nun werden einzelne Gesichtspunkte einer Verwendung des Hochfrequenzsenders schematisch anhand eines mechanisch gespeisten Lichtschalters als ein Anwendungsfall näher beschrieben. Selbstverständlich ist die Erfindung jedoch nicht auf diese spezielle Anwendung beschränkt.
a) Spannungserzeugung
   Zur Spannungserzeugung, d. h. der Umwandlung mechanischer in elektrischer Energie, wird ein piezoelektrischer Biegewandler eingesetzt, der z. B. bei einer Krafteinwirkung von 5 N eine Verbiegung von 5 mm erfährt und eine resultierende elektrische Spannung von 50 V an seiner Eigenkapazität von 50 nF aufbaut. Wandler mit diesen Parametern sind Stand der Technik und passen von den Abmessungen und mechanischen Anforderungen her gut zu einem handelsüblichen Lichtschalter.
b) Spannungsaufbereitung
   Es wird eine Spannungsstabilisierung durch Einsatz eines Spannungswandlers mit hohem Wirkungsgrad und hoher Eingangsspannungsdynamik nach dem Stand der Technik eingesetzt. Sinkt die Ladespannung am Kondensator im Betrieb dann z. B. von 20 V auf 5 V ab, stellt die Stabilisierungsschaltung am Ausgang konstant 3 V zur Verfügung.
c) Energiebetrachtung
   Die folgende Energiebetrachtung soll zeigen, dass mit der erzeugten Energie in unserem Ausführungsbeispiel der kurzzeitige Betrieb einer Prozessorschaltung und eines Hochfrequenzsenders möglich ist:
   Die elektrische Energie im Biegewandler sei: E = ½ C.U² = ½ 50.10⁻⁹· 50² [V² As/V] = 62,5 µWs, davon bleiben bei 80% Wirkungsgrad des Wandlers ca. 50 µWs übrig. Damit kann eine elektronische Schaltung, die z. B. ca. 20 mW (3 V und 6,6 mA) benötigt, für eine Zeitdauer von t = 50 µWs/20mW = 2,5 ms betrieben werden.
d) Übertragungsrate und Datenmenge
   Wird eine Modulationsrate des Hochfrequenzsenders von 100 Kbit/s vorausgesetzt, so können in dieser Zeit Daten mit einem Umfang von ca. 250 Bit ausgesendet werden. Diese Datenmenge reicht für eine Verschlüsselung der Identität des Schalters aus und bietet auch die Möglichkeit, die Übertragungssicherheit durch mehrmaliges Aussenden oder die Anwendung von Korrelationsverfahren zu erhöhen. Der Einsatz der Logikbaugruppe, typischerweise eines Mikroprozessors oder eines ASIC, gestattet weiterhin eine Verschlüsselung der zu übertragenden Daten.
e) Hochfrequenzsender
   Dem Hochfrequenzsender wird eine Leistung von 1 mW zugrunde gelegt, was ausreicht, innerhalb einer privaten Wohnung Daten sicher zu jedem Punkt zu senden. Dabei ist es ein typisches Szenario, dass alle Schalter, beispielsweise Lichtschalter, bei Betätigung ein oder mehrere Hochfrequenz-Telegramme aussenden, die von einem einzigen Empfänger empfangen werden und der die entsprechenden Aktionen (Lampe ein/aus, Lampe dimmen etc.) einleitet.

Selbstverständlich ist der energieautarke Hochfrequenzsender nicht auf eine Anwendung in der Gebäudetechnik beschränkt, sondern universell einsetzbar. Mögliche Anwendungsgebiete sind beispielsweise Schalter-Anwendungen wie handbetätigte Notrufsender, Zugangsberechtigungs-Abfragen, Fernbedienungen, andere Schalter, Endlagenschalter in Industrie, Verkehr, im Privathaushalt, in Zählwerken für Wasser, Gas und Strom, als Bewegungsmelder, Tierüberwachung, Einbruch/Diebstahlsicherung sowie allgemein in der Automobiltechnik zur Reduzierung des im Kraftfahrzeug vorhandenen Kabelstrangs oder in der Bahn.

Als Sensorik-Anwendung kommt beispielsweise ein Sensor für Temperatur, Druck, Kraft und andere Messgrößen in Frage, insbesondere zur Messung von Autoreifendruck und -temperatur, Achstemperatur und Beschleunigungen an Zügen, Temperatur, Druck, Kraft von Motoren und Anlagen in der Industrie.

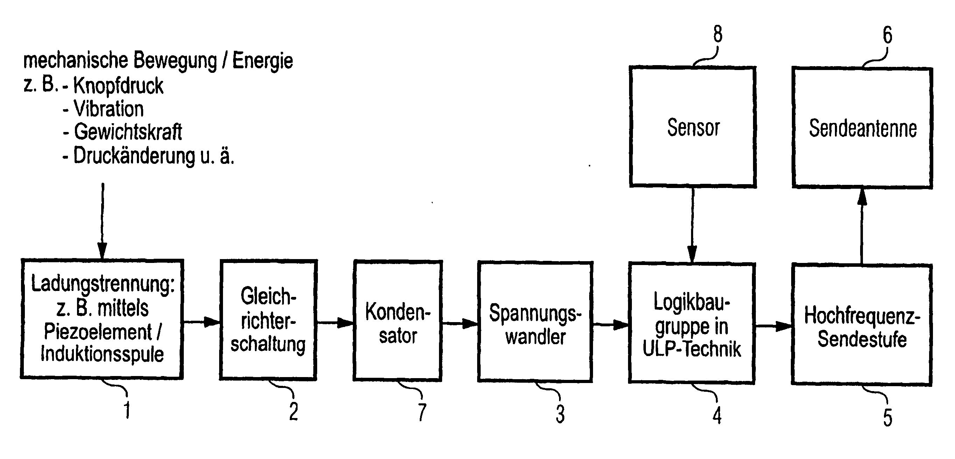

In dem folgenden Ausführungsbeispiel in Figur 1 wird schematisch die Arbeitsweise des energieautarken Hochfrequenzsenders dargestellt:

In Figur 1 zeigt skizzenhaft die verschiedenen Funktionseinheiten des Hochfrequenzsenders.

Zunächst wird mit einem elektromechanischen Wandler 1, vorzugsweise einem piezoelektrischen Biegewandler oder einer Induktionsspule, eine mechanische Energie zu einer Ladungstrennung und damit einer Spannungserzeugung genutzt. Die mechanische Energie kommt beispielsweise aus einer mechanischen Krafteinwirkung (z. B. Knopfdruck), aus einer Druckänderung oder einer Vibration.

Mit der erzeugten Spannung wird über eine Gleichrichterschaltung 2 ein Kondensator 7 geladen. Ebenso ist auch eine direkte Speisung der Spannungsregelschaltung 3 möglich, wobei beispielsweise der Wandler 1 selbst die Ladungen speichert. Die nachfolgende Spannungswandlung ist vorteilhaft, um aus der exponentiell abfallenden Ladespannung des Kondensators 7 eine über einen kurzen Zeitraum konstante Spannung zum Betrieb der nachfolgenden Elektronik zu erzeugen.

Mit der konstanten Spannung werden die nachfolgenden Logikbaugruppe 4 und Hochfrequenzsendestufe 5 aktiviert und versorgt, solange die gespeicherte Energie dies zulässt. Die Logikbaugruppe 4 enthält eine Mikroprozessor-Ablaufsteuerung, einen Speicher, in dem die Identität der Messstelle oder des Schalters abgelegt ist, und (optional) Sensoreingänge, über die einer oder mehrere Sensoren 8 angeschlossen werden können.

Steht durch mechanische Energiezufuhr eine Versorgungsspannung zur Verfügung, so wird folgender prozessorgesteuerte Ablauf ausgelöst:
a) Auslesen des Identifikationscodes
b) Auslesen der angeschlossenen Sensoren 8 (optional)
c) Verschlüsselung der Daten (optional)
d) Generierung eines Sendetelegramms, welches den Identifikationscode enthält
e) Aktivierung der Hochfrequenzsendestufe 5
f) Modulation der hochfrequenten Schwingung mit dem Sendetelegramm (optional mehrmals, bis ein anderes Abbruchkriterium als die maximal ausreichende Energie erreicht wird).

Die Hochfrequenzsendestufe 5 erzeugt eine hochfrequente Schwingung, die über die Sendeantenne 6 abgestrahlt wird. Dieser Schwingung ist das von der Logikbaugruppe 4 erzeugte Sendetelegramm aufmoduliert.

## Patentansprüche

1. Energieautarker Hochfrequenzsender, aufweisend
- mindestens einen elektromechanischen wandler (1) mit einer nachgeschalteten Gleichrichterschaltung (2) und einer Spannungewandlerschaltung (3).
- eine mit der Spannungewandlerschaltung verbundene Logikbaugruppe (4) mit einer Ablaufsteuerung und einem Speicher, in dem ein Identifikationscode gespeichert ist,
- eine Hochfrequenzsendestufe (5), die mit der Logikbaugruppe (4) und mindestens einer Sendeantenne (6) verbunden ist, wobei die Ablaufsteuerung den Identifikationscode aus dem Speicher der Logikbaugruppe ausliest,
ein Sendetelegram generiert, welches mindestens den Identifikationscode und Messdaten von zumindest einem Sensor enthält,
- die Hochfrequenzstufe zur Erzeugung einer hochfrequenten Schwingung für eine kurze Zeit bis zu einem anderen Abbruchkriterium als die maximal ausreichende Energie aktiviert und
- der hochfrequenten Schwingung das Sendetelegramm eufmoduliert.

2. Energieautarker Hochfrequenzsender nach Anspruch 1, bei dem der elektromechanische Wandler (1) mindestens ein piezoelektrisches Element enthält.

3. Energieautarker Hochfrequenzsender nach Anspruch 2, bei dem das mindestens eine piezoelektrische Element ein Biegewandler ist.

4. Energieautarker Hochfrequenzsender nach Anspruch 1, bei dem der elektromechanische Wandler (1) mindestens eine Induktionsspule enthält.

5. Energieautarker Hochfrequenzsender nach einem der vorhergehenden Ansprüche, bei dem die Spannungswandlerschaltung (3) ein weiteres Energiespeicherelement enthält.

6. Energieautarker Hochfrequenzsender nach Anspruch 5, bei dem die Spannungswandlerschaltung (3) getaktet betreibbar ist.

7. Energieautarker Hochfrequenzsender nach einem der vorhergehenden Ansprüche, bei dem zwischen der Gleichrichterschaltung (2) mindestens ein Kondensator (7) zur Energiespeicherung vorhanden ist.

8. Energieautarker Hochfrequenzsender nach einem der vorhergehenden Ansprüche, bei dem die Logikbaugruppe (4) mindestens einen Mikroprozessor und/oder einen ASIC enthält.

9. Energieautarker Hochfrequenzsender nach einem der vorhergehenden Ansprüche, bei dem die Logikbaugruppe (4) mit mindestens DEM Sensor (8) verbunden ist.

10. Energieautarker Hochfrequenzsender nach einem der vorhergehenden Ansprüche, bei dem die Logikbaugruppe (4) einen LC-Schwingkreis oder einen RC-Schwingkreis als Taktgeber aufweist.

11. Energieautarker Hochfrequenzsender nach einem der vorhergehenden Ansprüche, bei dem mittels der Hochfrequenzsendestufe (5) ein Hochfrequenzsignal mit einer Frequenz (f) größer als 1 MHz, insbesondere zwischen 100 MHz und 30 GHz, sendbar ist.

12. Energieautarker Hochfrequenzsender nach einem der vorhergehenden Ansprüche, bei dem die Bandbreite des Hochfrequenzsignals mehr als 100 kHz betragen kann.

13. Energieautarker Hochfrequenzsender nach einem der vorhergehenden Ansprüche, bei dem zwischen der Logikbaugruppe (4) und der Sendeantenne (6) eine Verzögerungsvorrichtung eingebracht ist.

14. Verfahren zum energieautarken Senden eines Hochfrequenzsignals, bei dem
a) mittels eines elektromechanischen Wandlers (1) eine mechanische Bewegung in ein Spannungssignal umgewandelt wird,
b) das Spannungssignal gleichgerichtet wird,
c) das gleichgerichtete Spannungssignal zur Herstellung eines zumindest abschnittsweise konstanten Spannungeniveaus gewandelt wird,
d) das Spannungssignal dann bis zu einem anderen abbruckriterium als die maximal ausreichende Energie zur Energieversorgung des karzzeitigen Betriebs mindestens einer Logikbaugruppe (4) in einer Hochfrequenzsendestufe verwendet wird,
e) von der Logikbaugruppe (4) mindestens ein Identifikationscode und Messdaten zumindest eines Sensors an die Hochfrequenzsendestufe (5) übermittelt wird,
f) von der Hochfrequenzsendestufe (5) ein durch den Identifikationscode und die Messdaten moduliertes Hochfrequenzsignal über ein Sendeantenne (6) abgestrahlt wird.

15. Verfahren nach Anspruch 14, bei dem
Schritt e) mindestens die Teilschritte
e1) Auslesen des Identifikationscodes, insbesondere aus einem Speicher der Logikbaugruppe (4);
e2) Generierung eines Sendetelegramms, welches den Identifikationscode enthält;
e3) Aktivierung der Hochfrequenzsendestufe (5);
e4) Modulation der hochfrequenten Schwingung mit dem Sendetelegramm.

16. Verfahren nach einem der vorhergehenden Ansprüche 14 oder 16, bei dem von der Logikbaugruppe (4) Messdaten mindestens eines Sensors (8) erfasst werden und diese Messdaten dem Hochfrequenzsignal aufgeprägt werden.

17. Verfahren nach einem der vorhergehenden Ansprüche 14 bis 16, bei dem mehrere Hochfrequenzsignale mit vollständigem Informationsgehalt hintereinander abgestrahlt werden.

18. Verfahren nach Anspruch 17, bei dem ein zeitlicher Abstand und/oder die Frequenz (f) der einzelnen Hochfrequenzsignale zueinander variabel einstellbar ist.

19. Verfahren nach einem der Ansprüche 14 bis 18, bei dem die Information des Hochfrequenzsignals verschlüsselt wird.

20. Verfahren nach Anspruch 19, bei dem mehrere Hochfrequenzsignale unterschiedlich verschlüsselt werden.

21. Verfahren nach einem der Ansprüche 14 bis 20, bei dem die Abstrahlung des Hochfrequenzsignals zeitverzögert wird.

22. Verfahren nach einem der Ansprüche 14 bis 21, bei dem das Hochfrequenzsignal mit einer Bandbreite gesendet wird, die größer als 100 kHz ist.

23. Verfahren nach einem der Ansprüche 14 bis 22, bei dem das Hochfrequenzsignal mit einer Frequenz größer als 1 MHz, insbesondere zwischen 100 MHz und 30 GHz, gesendet wird.

24. Verwendung eines Hochfrequenzsenders nach einem der Ansprüche 1 bis 13 in der Verkehrstechnik, insbesondere Automobiltechnik oder in der Gebäudetechnik, insbesondere der Installationstechnik.

## Claims

1. Energy-autonomous radiofrequency transmitter, having
- at least one electromechanical transducer (1) with a rectifier circuit (2) connected downstream and with a voltage converter circuit (3),
- a logic assembly (4), connected to the voltage converter circuit, with a sequence control and a memory in which an identification code is stored,
- a radiofrequency transmission stage (5), which is connected to the logic assembly (4) and at least one transmission antenna (6), the sequence control reading out the identification code from the memory of the logic assembly, generating a transmission telegram containing at least the identification code and measurement data from at least one sensor,
- activating the radiofrequency stage for the generation of a radiofrequency oscillation for a short time up to a termination criterion different from the maximum sufficient energy, and
- modulating the transmission telegram onto the radiofrequency oscillation.

2. Energy-autonomous radiofrequency transmitter according to Claim 1, in which the electromechanical transducer (1) contains at least one piezoelectric element.

3. Energy-autonomous radiofrequency transmitter according to Claim 2, in which the at least one piezoelectric element is a bending transducer.

4. Energy-autonomous radiofrequency transmitter according to Claim 1, in which the electromechanical transducer (1) contains at least one induction coil.

5. Energy-autonomous radiofrequency transmitter according to one of the preceding claims, in which the voltage converter circuit (3) contains a further energy storage element.

6. Energy-autonomous radiofrequency transmitter according to Claim 5, in which the voltage converter circuit (3) can be operated in a clocked manner.

7. Energy-autonomous radiofrequency transmitter according to one of the preceding claims, in which at least one capacitor (7) for storing energy is present between the rectifier circuit (2).

8. Energy-autonomous radiofrequency transmitter according to one of the preceding claims, in which the logic assembly (4) contains at least the microprocessor and/or an ASIC.

9. Energy-autonomous radiofrequency transmitter according to one of the preceding claims, in which the logic assembly (4) is connected to at least one sensor (8).

10. Energy-autonomous radiofrequency transmitter according to one of the preceding claims, in which the logic assembly (4) has an LC resonant circuit or an RC resonant circuit as clock generator.

11. Energy-autonomous radiofrequency transmitter according to one of the preceding claims, in which a radiofrequency signal having a frequency (f) of greater than 1 MHz, in particular between 100 MHz and 30 GHz, can be transmitted by means of the radiofrequency transmission stage (5) .

12. Energy-autonomous radiofrequency transmitter according to one of the preceding claims, in which the bandwidth of the radiofrequency signal can be more than 100 kHz.

13. Energy-autonomous radiofrequency transmitter according to one of the preceding claims, in which a delay device is introduced between the logic assembly (4) and the transmission antenna (6).

14. Method for the energy-autonomous transmission of a radiofrequency signal, in which
a) a mechanical movement is converted into a voltage signal by means of an electromechanical transducer (1) ;
b) the voltage signal is rectified;
c) the rectified voltage signal is converted in order to produce a voltage level that is constant at least in sections;
d) the voltage signal is then used up to a termination criterion different from the maximum sufficient energy, to supply energy for the short-time operation of at least one logic assembly (4) in a radiofrequency transmission stage,
e) the logic assembly (4) communicates at least one identification code and measurement data from at least one sensor to the radiofrequency transmission stage (5).
f) the radiofrequency transmission stage (5) radiates a radiofrequency signal modulated by the identification code and the measurement data via a transmission antenna (6).

15. Method according to Claim 14, in which step e) contains at least the following substeps
e1) read-out of the identification code, in particular from a memory of the logic assembly (4);
e2) generation of a transmission telegram containing the identification code;
e3) activation of the radiofrequency transmission stage (5) ;
e4) modulation of the radiofrequency oscillation with the transmission telegram.

16. Method according to either of the preceding Claims 14 and 15, in which measurement data from at least one sensor (8) are acquired by the logic assembly (4) and said measurement data are impressed on the radiofrequency signal.

17. Method according to one of the preceding Claims 14 to 16, in which a plurality of radiofrequency signals with complete information content are radiated one after the other.

18. Method according to Claim 17, in which a time interval and/or the frequency (f) of the individual radiofrequency signals with respect to one another can be set in a variable manner.

19. Method according to one of Claims 14 to 18, in which the information of the radiofrequency signal is encrypted.

20. Method according to Claim 19, in which a plurality of radiofrequency signals are encrypted differently.

21. Method according to one of Claims 14 to 20, in which the radiation of the radiofrequency signal is time-delayed.

22. Method according to one of Claims 14 to 21, in which the radiofrequency signal is transmitted with a bandwidth which is greater than 100 kHz.

23. Method according to one of Claims 14 to 22, in which the radiofrequency signal is transmitted with a frequency of greater than 1 MHz, in particular between 100 MHz and 30 GHz.

24. Use of a radiofrequency transmitter according to one of Claims 1 to 13 in traffic technology, in particular automotive technology, or in building technology, in particular installation technology.

## Revendications

1. Emetteur de haute fréquence à autarcie d'énergie, comprenant
- au moins un transducteur (1) électromécanique ayant un circuit (2) redresseur en aval et un circuit (3) transformateur de tension,
- un module (4) logique relié au circuit transformateur de tension et ayant une commande de marche et une mémoire, dans laquelle est mémorisé un code d'identification,
- un étage (5) d'émission de haute fréquence, qui est relié au module (4) logique et à au moins une antenne (6) d'émission, la commande de marche lisant le code d'identification dans la mémoire du module logique,
produisant un télégramme d'émission qui contient au moins le code d'identification et des données de mesure par au moins un capteur,
- l'étage de haute fréquence étant activé pour la production d'une oscillation de haute fréquence pendant une durée courte jusqu'à un critère d'interruption autre que l'énergie suffisant au maximum et
- l'oscillation de haute fréquence module le télégramme d'émission.

2. Emetteur de haute fréquence à autarcie d'énergie suivant la revendication 1, dans lequel le transducteur (1) électromécanique comporte au moins un élément piézoélectrique.

3. Emetteur de haute fréquence à autarcie d'énergie suivant la revendication 2, dans lequel le au moins un élément piézoélectrique est un transducteur à flexion.

4. Emetteur de haute fréquence à autarcie d'énergie suivant la revendication 1, dans lequel le transducteur (1) électromécanique comporte au moins une bobine d'induction.

5. Emetteur de haute fréquence à autarcie d'énergie suivant l'une des revendications précédentes, dans lequel le circuit (3) transformateur de tension comporte un élément supplémentaire d'emmagasinage d'énergie.

6. Emetteur de haute fréquence à autarcie d'énergie suivant la revendication 5, dans lequel le circuit (3) transformateur de tension peut fonctionner en cadence.

7. Emetteur de haute fréquence à autarcie d'énergie suivant l'une des revendications précédentes, dans lequel il est prévu au moins un condensateur (7) d'emmagasinage de l'énergie entre le circuit (2) redresseur.

8. Emetteur de haute fréquence à autarcie d'énergie suivant l'une des revendications précédentes, dans lequel le module (4) logique comporte au moins un microprocesseur et/ou un ASIC.

9. Emetteur de haute fréquence à autarcie d'énergie suivant l'une des revendications précédentes, dans lequel le module (4) logique est relié au moins au capteur (8).

10. Emetteur de haute fréquence à autarcie d'énergie suivant l'une des revendications précédentes, dans lequel le module (4) logique comporte un circuit oscillant LC ou un circuit oscillant RC comme horloge.

11. Emetteur de haute fréquence à autarcie d'énergie suivant l'une des revendications précédentes, dans lequel il peut être envoyé au moyen de l'étage (5) d'émission de haute fréquence un signal de haute fréquence d'une fréquence (f) supérieure à 1 MHz, notamment comprise entre 100 MHz et 30 GHz.

12. Emetteur de haute fréquence à autarcie d'énergie suivant l'une des revendications précédentes, dans lequel la largeur de bande du signal de haute fréquence peut être supérieure à 100 KHz.

13. Emetteur de haute fréquence à autarcie d'énergie suivant l'une des revendications précédentes, dans lequel un dispositif de temporisation est monté entre le module (4) logique et l'antenne (6) d'émission.

14. Procédé d'émission à autarcie d'énergie d'un signal de haute fréquence, dans lequel
a) on convertit au moyen d'un transducteur (1) électromécanique une déplacement mécanique en un signal de tension,
b) on redresse le signal de tension,
c) on transforme le signal de tension redressé pour produire un niveau de tension constant au moins par parties,
d) on utilise alors le signal de tension jusqu'à un critère d'interruption autre que l'énergie suffisant au maximum pour l'alimentation en énergie de fonctionnement de courte durée d'au moins un module (4) logique dans un étage d'émission en haute fréquence,
e) on transmet par le module (4) logique au moins un code d'identification et des données de mesure d'au moins un capteur à l'étage (5) d'émission de haute fréquence,
f) on émet par l'étage (5) d'émission de haute fréquence, par l'intermédiaire d'une antenne, un signal de haute fréquence modulé par le code d'identification et les données de mesure.

15. Procédé suivant la revendication 14, dans lequel le stade (e) comprend au moins les sous-stades
e1) de lecture du code d'identification, notamment dans une mémoire du module (4) logique ;
e2) de production d'un télégramme d'émission qui contient le code d'identification ;
e3) d'activation de l'étage (5) d'émission de haute fréquence ;
e4) de modulation de l'oscillation de haute fréquence par le télégramme d'émission.

16. Procédé suivant l'une des revendications 14 ou 15 précédentes, dans lequel on détecte par le module (4) logique des données de mesure d'au moins un capteur (8) et on applique ces données de mesure au signal de haute fréquence.

17. Procédé suivant l'une des revendications 14 à 16 précédentes, dans lequel on émet plusieurs signaux de haute fréquence les uns derrière les autres ayant une teneur informatique complète.

18. Procédé suivant la revendication 17, dans lequel on règle de manière variable la distance dans le temps et/ou la fréquence (f) des divers signaux de haute fréquence les uns par rapport aux autres.

19. Procédé suivant l'une des revendications 14 à 18, dans lequel on chiffre l'information du signal de haute fréquence.

20. Procédé suivant la revendication 19, dans lequel on chiffre différemment plusieurs signaux de haute fréquence.

21. Procédé suivant l'une des revendications 14 à 20, dans lequel on retarde dans le temps l'émission du signal de haute fréquence.

22. Procédé suivant l'une des revendications 14 à 21, dans lequel on émet le signal de haute fréquence en lui donnant une largeur de bande qui est supérieure à 100 KHz.

23. Procédé suivant l'une des revendications 14 à 22, dans lequel on émet le signal de haute fréquence à une fréquence supérieure à 1 MHz, notamment comprise entre 100 MHz et 30 GHz.

24. Utilisation d'un émetteur de haute fréquence suivant l'une des revendications 1 à 13 dans la technique de la circulation, notamment dans la technique automobile ou dans la technique du bâtiment, notamment dans la technique des installations.
